# EUROPÄISCHE PATENTANMELDUNG

(11) **EP 4 435 996 A1**
(43) Veröffentlichungstag der Anmeldung: **25.09.2024**
(21) Anmeldenummer: 23163689.5
(22) Anmeldetag: 23.03.2023
(51) Int. Cl.: H02J 7/00, B25F 5/00

(54) **VERFAHREN UND SYSTEM ZUM BETREIBEN EINES ELEKTRISCH ANGETRIEBENEN BEARBEITUNGSGERÄTS MIT MINDESTENS EINEM AKKUPACK UND AKKUPACK**

(71) Anmelder: Andreas Stihl AG & Co. KG, 71336 Waiblingen (DE)
(72) Erfinder: SAUERTEIG, Daniel, 71394 Kernen im Remstal (DE); SIGLE, Christian, 71384 Weinstadt (DE); DIETRICH, Simon, 71336 Waiblingen (DE); SCHMIDT, Tobias, 71149 Bondorf (DE); WEGMANN, Raphael, 71229 Leonberg (DE)
(74) Vertreter: Patentanwälte Ruff, Wilhelm, Beier, Dauster & Partner mbB

(57) **Zusammenfassung**

Die Erfindung bezieht sich auf ein Verfahren zum Betreiben eines elektrisch angetriebenen Bearbeitungsgeräts (1) mit mindestens einem Akkupack (2), der zur Versorgung des Bearbeitungsgeräts (1) mit elektrischer Antriebsleistung (AL) vorgesehen ist, wobei das Bearbeitungsgerät (1) und der Akkupack (2) miteinander zur Versorgung lösbar elektrisch verbunden sind,
- wobei das Bearbeitungsgerät (1) aus einer Menge von mit dem Akkupack (2) lösbar elektrisch verbindbaren verschiedenen Bearbeitungsgeräten (1a, 1b, 1c, 1d) gewählt ist, die verschieden sind in einer jeweiligen Aufnahmeleistungsgröße (mSALG), und/oder wobei das Bearbeitungsgerät (1) verschiedene Betriebsmodi (BMa, BMb) aufweist, die verschieden sind in einer jeweiligen Aufnahmeleistungsgröße (mSALG),
- wobei mindestens eine Aufnahmeleistungsgröße (mSALG), insbesondere während des Betriebs des Bearbeitungsgeräts (1) mit dem Akkupack (2), zumindest zeitweise höher ist als eine Dauer-Abgabeleistungsgröße (DALG) des Akkupacks (2),
- wobei das Verfahren die Schritte aufweist:
a) Senden einer Anfrage (Q) einer Aufnahmeleistungsgrößen-Information (mSALGI) von dem Bearbeitungsgerät (1) an den Akkupack (2),
b) Bereitstellen einer Antwort (R) von dem Akkupack (2) an das Bearbeitungsgerät (1) in Abhängigkeit von der gesendeten Anfrage (Q), und
c) Betreiben des Bearbeitungsgeräts (1) in Abhängigkeit von der bereitgestellten Antwort (R).

## Beschreibung

### ANWENDUNGSGEBIET UND STAND DER TECHNIK

Die Erfindung bezieht sich auf ein Verfahren und ein System, insbesondere jeweils, zum Betreiben eines elektrisch angetriebenen Bearbeitungsgeräts mit mindestens einem Akkupack und einen Akkupack für ein solches System.

### AUFGABE UND LÖSUNG

Der Erfindung liegt als Aufgabe die Bereitstellung eines Verfahrens und eines Systems zum Betreiben eines elektrisch angetriebenen Bearbeitungsgeräts mit mindestens einem Akkupack zugrunde, das verbesserte Eigenschaften aufweist, insbesondere eine Leistungssteigerung ermöglicht. Des Weiteren liegt der Erfindung als Aufgabe die Bereitstellung eines Akkupacks für ein solches System zugrunde.

Die Erfindung löst diese Aufgabe durch die Bereitstellung eines Verfahrens, eines Systems und eines Akkupacks beschrieben in den unabhängigen Ansprüchen. Vorteilhafte Weiterbildungen und/oder Ausgestaltungen der Erfindung sind in den abhängigen Ansprüchen beschrieben.

Das erfindungsgemäße Verfahren ist zum Betreiben eines elektrisch angetriebenen Bearbeitungsgeräts mit mindestens einem Akkupack (Englisch: battery pack), insbesondere mehreren Akkupacks. Der Akkupack ist zur Versorgung des Bearbeitungsgeräts mit elektrischer Antriebsleistung vorgesehen. Das Bearbeitungsgerät und der Akkupack sind miteinander zur Versorgung lösbar elektrisch verbunden. Das Bearbeitungsgerät ist aus einer Menge von mit dem Akkupack lösbar elektrisch verbindbaren verschiedenen Bearbeitungsgeräten gewählt. Die Bearbeitungsgeräte sind verschieden in einer jeweiligen Aufnahmeleistungsgröße. Zusätzlich oder alternativ weist das Bearbeitungsgerät verschiedene Betriebsmodi auf. Die Betriebsmodi sind verschieden in einer, insbesondere der, jeweiligen Aufnahmeleistungsgröße. Mindestens eine Aufnahmeleistungsgröße ist, insbesondere während des Betriebs des Bearbeitungsgeräts mit dem Akkupack, zumindest zeitweise höher als eine Dauer-Abgabeleistungsgröße des Akkupacks. Das Verfahren weist die Schritte auf: a) Senden bzw. Kommunizieren einer Anfrage einer Aufnahmeleistungsgrößen-Information von dem Bearbeitungsgerät an den Akkupack, b) Bereitstellen einer Antwort von dem Akkupack an das Bearbeitungsgerät in Abhängigkeit von der gesendeten Anfrage. c) Betreiben des Bearbeitungsgeräts in Abhängigkeit von der bereitgestellten Antwort, insbesondere mittels des Bearbeitungsgeräts.

Dies ermöglicht das Betreiben des Bearbeitungsgeräts mit einer Aufnahmeleistungsgröße, die zumindest zeitweise höher als die Dauer-Abgabeleistungsgröße sein kann. Somit ermöglicht dies eine Leistungssteigerung bzw. eine Steigerung der nutzbaren Akkupack-Leistungsfähigkeit.

Insbesondere können/kann das Verfahren, das Betreiben, die Versorgung, das Senden und/oder das Bereitstellen automatisch und/oder computerimplementiert sein.

Das Bearbeitungsgerät und/oder der Akkupack können/kann mobil bzw. portabel sein. Insbesondere kann mobil eine Masse von maximal 50 kg (Kilogramm), insbesondere maximal 20 kg, insbesondere maximal 10 kg, insbesondere maximal 5 kg, und/oder minimal 0,2 kg, insbesondere minimal 0,5 kg, insbesondere minimal 1 kg, insbesondere minimal 2 kg, bedeuten.

Das Bearbeitungsgerät kann ein Bearbeitungswerkzeug und/oder einen elektrischen Antriebsmotor, insbesondere zum Antrieb des Bearbeitungswerkzeugs, aufweisen. Insbesondere kann die Antriebsleistung für den Antriebsmotor sein. Zusätzlich oder alternativ kann das Bearbeitungsgerät boden- und/oder handgeführt, insbesondere handgetragen, und/oder ein Garten-, Forst-, Bau- und/oder Bodenbearbeitungsgerät sein.

Der Akkupack kann eine Mehrzahl von Akkumulatorzellen aufweisen. Insbesondere können die Akkumulatorzellen jeweils einzelne wieder aufladbare Speicherelemente für elektrische Energie auf elektrochemischer Basis sein. Zusätzlich oder alternativ können die Akkumulatorzellen Lithium-Ionen-Akkumulatorzellen sein. Weiter zusätzlich oder alternativ können die Akkumulatorzellen gleich sein, insbesondere typ- und/oder baugleich. Weiter zusätzlich oder alternativ kann eine jeweilige Zell-Spannung, insbesondere Zell-Nennspannung, einer jeweiligen der Akkumulatorzellen minimal 2 V (Volt) und/oder maximal 4,2 V, insbesondere 3,6 V, sein. Weiter zusätzlich oder alternativ können die Akkumulatorzellen Rundzellen, prismatische Zellen oder Pouchzellen sein.

Das Bearbeitungsgerät und der Akkupack können lösbare elektrische Leistungskontakte zur Versorgung, und insbesondere lösbare elektrische Kommunikationskontakte zu dem Senden und/oder dem Bereitstellen, aufweisen. Zusätzlich oder alternativ kann die Verbindung mit Berührung sein bzw. die Leistungskontakte, und insbesondere die Kommunikationskontakte, können zur Berührung voneinander vorgesehen sein. Weiter zusätzlich oder alternativ können die Leistungskontakte, und insbesondere die Kommunikationskontakte, Steckverbinder aufweisen, insbesondere sein. Weiter zusätzlich oder alternativ kann der Begriffsbestandteil "Terminal" für den Begriffsbestandteil "Kontakt" synonym verwendet werden.

Das Bearbeitungsgerät und der Akkupack können miteinander zur Versorgung lösbar mechanisch verbunden sein.

Lösbar kann werkzeugfrei, zerstörungsfrei und/oder durch einen Benutzer lösbar sein.

Der Begriff "gekoppelt" kann für den Begriff "verbunden" synonym verwendet werden.

Das Bearbeitungsgerät und der Akkupack können zur Entnahme und/oder zum Austausch des Akkupacks vorgesehen sein, insbesondere durch den Benutzer. Insbesondere kann das Bearbeitungsgerät einen Akkuschacht aufweisen, wobei der Akkuschacht zur Aufnahme des Akkupacks vorgesehen sein kann.

Zu einem Zeitpunkt können entweder der Akkupack und das Bearbeitungsgerät oder der Akkupack und ein anderes Bearbeitungsgerät miteinander zur Versorgung verbunden sein.

Zu einem Zeitpunkt kann das Bearbeitungsgerät in entweder einem Betriebsmodus oder einem anderen Betriebsmodus sein.

Die Aufnahmeleistungsgröße kann eine maximale Aufnahmeleistungsgröße bzw. eine Spitzen-Aufnahmeleistungsgröße sein.

Die Aufnahmeleistungsgröße kann eine Aufnahmeleistung oder eine der Aufnahmeleistung korrespondierende Größe sein, wie z.B. ein Aufnahmestrom.

Die Dauer-Abgabeleistungsgröße kann eine Dauer-Abgabeleistung oder eine der Dauer-Abgabeleistung korrespondierende Größe sein, wie z.B. ein Dauer-Abgabestrom.

Die Dauer-Abgabeleistungsgröße kann eine zeitlich unbegrenzte Dauer-Abgabeleistungsgröße sein, insbesondere bis der Akkupack leer ist bzw. bis ein Entladeschlussparameter, wie z.B. ein Unterspannungsgrenzwert, erreicht ist.

Die Aufnahmeleistung und/oder die Dauer-Abgabeleistung können/kann die Antriebsleistung sein.

Die Aufnahmeleistungsgröße und/oder die Dauer-Abgabeleistungsgröße können/kann einen Wert aufweisen.

Der Begriff "ausgebildet", "konfiguriert" oder "eingerichtet" kann für den Begriff "vorgesehen" synonym verwendet werden.

Der Begriff "umfasst" oder "hat" kann für den Begriff "aufweist" synonym verwendet werden.

Die Anfrage, die Aufnahmeleistungsgrößen-Information und/oder die Antwort können/kann einen Inhalt aufweisen.

Der Begriff "Anforderung" oder "Abfrage" kann für den Begriff "Anfrage" synonym verwendet werden.

Senden der Anfrage kann als Anfragen bezeichnet werden.

Das Bereitstellen der Antwort kann ein Empfangen bzw. Kommunizieren der Antwort von dem Akkupack an das Bearbeitungsgerät umfassen. Insbesondere kann Kommunizieren der Antwort als Antworten bezeichnet werden.

Der Begriff "Kontrollieren" kann für den Begriff "Betreiben" synonym verwendet werden.

Die Formulierung "basierend auf" kann für die Formulierung "in Abhängigkeit von" synonym verwendet werden.

Das Senden bzw. der Schritt a) kann mittels einer Sendeeinrichtung, insbesondere des Bearbeitungsgeräts, erfolgen.

Das Bereitstellen bzw. der Schritt b) kann mittels einer Bereitstellungseinrichtung, insbesondere des Akkupacks, erfolgen.

Das Betreiben bzw. der Schritt c) kann mittels einer Betriebseinrichtung, insbesondere des Bearbeitungsgeräts, erfolgen.

Der Schritt b) kann zeitlich nach dem a) erfolgen. Zusätzlich oder alternativ kann der Schritt c) zeitlich nach dem Schritt b) erfolgen.

Die Formulierung "ausgeführt werden" kann für den Begriff "erfolgen" synonym verwendet werden.

In einer Weiterbildung der Erfindung umfasst die Anfrage die Aufnahmeleistungsgröße, und insbesondere eine Zeitdauergröße. Für die Zeitdauergröße soll die Aufnahmeleistungsgröße von dem Akkupack verfügbar sein. Das Bereitstellen der Antwort umfasst ein Bestimmen einer von dem Akkupack verfügbaren Aufnahmeleistungsgröße, und insbesondere eine verfügbare Zeitdauergröße. Für die verfügbare Zeitdauergröße ist die verfügbare Aufnahmeleistungsgröße von dem Akkupack verfügbar. Das Betreiben des Bearbeitungsgeräts erfolgt maximal mit einer Aufnahmeleistungsgröße entsprechend der verfügbaren Aufnahmeleistungsgröße zumindest zeitweise, insbesondere maximal für eine Zeitdauergröße entsprechend der verfügbaren Zeitdauergröße. Dies ermöglicht eine Verschiedenheit bzw. eine Spezifizität der Anfrage, insbesondere für das Bearbeitungsgerät und/oder den Betriebsmodus, und somit des Bereitstellens der Antwort und somit des Betreibens. Zusätzlich oder alternativ ermöglicht dies ein Nicht-Überschreiten der verfügbaren Aufnahmeleistungsgröße, und insbesondere der verfügbaren Zeitdauergröße. Somit ermöglicht dies ein Einhalten von Randbedingungen, insbesondere Zellspezifikationen, des Akkupacks. Insbesondere kann die Anfrage in dem Bearbeitungsgerät, insbesondere einer Speichereinrichtung des Bearbeitungsgeräts, hinterlegt sein, insbesondere gespeichert. Zusätzlich oder alternativ können die Bearbeitungsgeräte und/oder die Betriebsmodi verschieden sein in einer jeweiligen Zeitdauergröße. Weiter zusätzlich oder alternativ kann die Zeitdauergröße eine Zeitdauer oder eine der Zeitdauer korrespondierende Größe sein. Weiter zusätzlich oder alternativ kann die Zeitdauergröße eine minimale und/oder begrenzte Zeitdauergröße sein und/oder einen Wert aufweisen. Weiter zusätzlich oder alternativ kann der Begriff "bereitstellbar" für den Begriff "verfügbar" synonym verwendet werden. Weiter zusätzlich oder alternativ kann die Formulierung "bereitstellbare Abgabeleistungsgröße" für die Formulierung "verfügbare Aufnahmeleistungsgröße" synonym verwendet werden. Weiter zusätzlich oder alternativ kann der Begriff "Präzidierung" für den Begriff "Antwort" synonym verwendet werden. Weiter zusätzlich oder alternativ kann die Antwort die verfügbare Aufnahmeleistungsgröße, und insbesondere die verfügbare Zeitdauergröße und/oder die Dauer-Abgabeleistungsgröße, umfassen. Weiter zusätzlich oder alternativ kann das Bestimmen automatisch und/oder computerimplementiert sein. Weiter zusätzlich oder alternativ kann der Begriff "gleich" für den Begriff "entsprechend" synonym verwendet werden.

In einer Ausgestaltung der Erfindung erfolgt das Bestimmen der verfügbaren Aufnahmeleistungsgröße, und insbesondere der verfügbaren Zeitdauergröße, anhand von Parametern einer Kennlinie einer Abgabeleistungsgröße über einer Zeitdauergröße, die durch den Akkupack definiert ist. Dies ermöglicht eine besonders gute Spezifizität der Antwort. Insbesondere können die Parameter einen Wert aufweisen. Zusätzlich oder alternativ können die Parameter in dem Akkupack, insbesondere einer Speichereinrichtung des Akkupacks, hinterlegt sein, insbesondere gespeichert. Weiter zusätzlich oder alternativ kann der Begriff "Stützpunkt" für den Begriff "Parameter" synonym verwendet werden. Weiter zusätzlich oder alternativ kann der Begriff "spezifiziert" für den Begriff "definiert" synonym verwendet werden.

In einer Weiterbildung der Erfindung löst das Senden der Anfrage das Bereitstellen der Antwort aus. Zusätzlich oder alternativ weist die Antwort die Parameter der Kennlinie der Abgabeleistungsgröße über der Zeitdauergröße, die durch den Akkupack definiert ist, auf. Das Verfahren weist den Schritt auf: Bestimmen der von dem Akkupack verfügbaren Aufnahmeleistungsgröße, und insbesondere der verfügbaren Zeitdauergröße, für die die verfügbare Aufnahmeleistungsgröße von dem Akkupack verfügbar ist, anhand von der bereitgestellten Antwort mittels des Bearbeitungsgeräts, insbesondere einer Bestimmungseinrichtung des Bearbeitungsgeräts. Das Betreiben des Bearbeitungsgeräts erfolgt maximal mit der Aufnahmeleistungsgröße entsprechend der verfügbaren Aufnahmeleistungsgröße zumindest zeitweise, insbesondere maximal für die Zeitdauergröße entsprechend der verfügbaren Zeitdauergröße. Dies ermöglicht eine besonders gute Spezifizität der Antwort. Zusätzlich oder alternativ ermöglicht dies eine Verschiedenheit bzw. eine Spezifizität des Betreibens, insbesondere für das Bearbeitungsgerät und/oder den Betriebsmodus. Weiter zusätzlich oder alternativ ermöglicht dies ein Nicht-Überschreiten der verfügbaren Aufnahmeleistungsgröße, und insbesondere der verfügbaren Zeitdauergröße. Somit ermöglicht dies ein Einhalten von Randbedingungen, insbesondere Zellspezifikationen, des Akkupacks. Insbesondere können/kann das Auslösen und/oder das Bestimmen automatisch und/oder computerimplementiert sein. Zusätzlich oder alternativ kann das Verfahren den Schritt aufweisen: Bestimmen der Dauer-Abgabeleistungsgröße anhand von der bereitgestellten Antwort mittels des Bearbeitungsgeräts. Weiter zusätzlich oder alternativ können die Parameter in dem Bearbeitungsgerät, insbesondere einer Speichereinrichtung des Bearbeitungsgeräts, hinterlegt werden, insbesondere gespeichert.

Es wäre auch möglich, dass ohne das Senden der Anfrage der Akkupack die Parameter bereitstellt, insbesondere zeitlich dauerhaft bzw. zyklisch und/oder solange, bis das Bearbeitungsgerät die Bereitstellung bestätigt. Dies könnte eine unabhängige Erfindung sein.

In einer Ausgestaltung der Erfindung ist mit zunehmender Zeitdauergröße die Abgabeleistungsgröße in einem ersten Bereich konstant, nimmt in einem zweiten Bereich ab und ist in einem dritten Bereich konstant, insbesondere entspricht der Dauer-Abgabeleistungsgröße. Insbesondere kann der zweite Bereich an den ersten Bereich direkt anschließen und/oder der dritte Bereich kann an den zweiten Bereich direkt anschließen. Zusätzlich oder alternativ kann mit zunehmender Zeitdauergröße die Abgabeleistungsgröße in dem zweiten Bereich exponentiell oder hyperbelartig oder linear oder stufenförmig abnehmen.

In einer Ausgestaltung der Erfindung erfolgt das Bestimmen derart, dass mit abnehmender Priorität erstens die Zeitdauergröße erreicht wird, zweitens die Aufnahmeleistungsgröße, falls möglich, andernfalls mindestens eine für die, insbesondere erreichte, Zeitdauergröße von dem Akkupack maximal verfügbare Aufnahmeleistungsgröße erreicht wird, aber nicht mehr, und drittens die, insbesondere erreichte, Zeitdauergröße maximiert wird, falls möglich. Dies, insbesondere das Erreichen der Zeitdauergröße jedenfalls, ermöglicht, dass wenn ein typisches Bearbeiten mittels des Bearbeitungsgeräts aufgrund ausreichender Aufnahmeleistungsgröße begonnen werden kann, dieses beendet können werden sollte. Und falls die Aufnahmeleistungsgröße nicht ausreichen sollte, sollte das Bearbeiten gar nicht erst begonnen werden können. Insbesondere kann dies überraschenderweise vorteilhaft sein gegenüber einem Bestimmen derart, dass mit abnehmender Priorität erstens die Aufnahmeleistungsgröße, falls möglich, andernfalls mindestens eine von dem Akkupack maximal verfügbare Aufnahmeleistungsgröße erreicht wird, und zweitens die Zeitdauergröße, falls möglich, andernfalls eine für die, insbesondere erreichte, Aufnahmeleistungsgröße von dem Akkupack maximal verfügbare Zeitdauergröße erreicht wird. Denn dabei könnte das Bearbeiten nicht beendet werden. Insbesondere kann die Zeitdauergröße auf einen, insbesondere hinterlegten, Maximal-Zeitdauergröße-Wert maximiert werden. Dies kann eine vollständige Antwort ermöglichen.

In einer Ausgestaltung der Erfindung weist das Verfahren auf: Ermitteln, insbesondere Erfassen, einer Ist-Aufnahmeleistungsgröße des Betreibens. Bestimmen einer verfügbaren Rest-Zeitdauergröße, für die die verfügbare Aufnahmeleistungsgröße von dem Akkupack verfügbar ist, in Abhängigkeit von der ermittelten Ist-Aufnahmeleistungsgröße. Das Betreiben erfolgt in Abhängigkeit von der bestimmten Rest-Zeitdauergröße, insbesondere bei Rest-Zeitdauergröße gleich Null derart, dass mindestens die Dauer-Abgabeleistungsgröße, insbesondere eine gegenüber der Dauer-Abgabeleistungsgröße reduzierte Abgabeleistungsgröße, die von der Antwort aufgewiesen ist und/oder anhand der Parameter bestimmt ist, nicht überschritten wird. Dies ermöglicht ein Einhalten von Randbedingungen, insbesondere Zellspezifikationen, des Akkupacks. Zusätzlich oder alternativ ermöglicht dies, insbesondere die reduzierte Abgabeleistungsgröße, einen Ausgleich des Betreibens mit der Aufnahmeleistungsgröße höher als die Dauer-Abgabeleistungsgröße. Insbesondere kann ein Bearbeitungsgerät, das nie mit der Aufnahmeleistungsgröße höher als die Dauer-Abgabeleistungsgröße und/oder nicht bis Rest-Zeitdauergröße gleich Null betrieben wird, mit der Dauer-Abgabeleistungsgröße betrieben werden, insbesondere zeitlich unbegrenzt bzw. dauerhaft, insbesondere bis der Akkupack leer ist bzw. bis ein Entladeschlussparameter, wie z.B. ein Unterspannungsgrenzwert, erreicht ist. Zusätzlich oder alternativ kann oder braucht nicht die Aufnahmeleistungsgröße eine Temperatur, insbesondere des Akkupacks, sein, da diese zu träge sein kann. Weiter zusätzlich oder alternativ kann der Begriff "Messen" für den Begriff "Erfassen" synonym verwendet werden. Weiter zusätzlich oder alternativ können/kann das Ermitteln und/oder das Bestimmen automatisch und/oder computerimplementiert sein und/oder zeitlich dauerhaft bzw. zyklisch bzw. wiederholt erfolgen. Weiter zusätzlich oder alternativ kann der Begriff "Präzidieren" für den Begriff "Bestimmen" synonym verwendet werden. Weiter zusätzlich oder alternativ kann die Rest-Zeitdauergröße, insbesondere ausgehend von der bestimmten verfügbaren Zeitdauergröße, abnehmen, falls die Aufnahmeleistungsgröße höher als die Dauer-Abgabeleistungsgröße ist. Weiter zusätzlich oder alternativ kann die Rest-Zeitdauergröße, insbesondere wieder, zunehmen, falls die Aufnahmeleistungsgröße niedriger als die Dauer-Abgabeleistungsgröße ist. Weiter zusätzlich oder alternativ kann die Rest-Zeitdauergröße gleichbleiben, falls die Aufnahmeleistungsgröße gleich der Dauer-Abgabeleistungsgröße ist.

Insbesondere kann das Ermitteln der Ist-Aufnahmeleistungsgröße mittels des Akkupacks erfolgen. Zusätzlich oder alternativ kann das Bestimmen der Rest-Zeitdauergröße mittels des Bearbeitungsgeräts erfolgen.

In einer Ausgestaltung der Erfindung erfolgt das Ermitteln der Ist-Aufnahmeleistungsgröße mittels des Bearbeitungsgeräts, insbesondere einer Sensorik des Bearbeitungsgeräts. Insbesondere weist das Verfahren auf: Senden der ermittelten Ist-Aufnahmeleistungsgröße von dem Bearbeitungsgerät an den Akkupack. Zusätzlich oder alternativ erfolgt das Bestimmen der Rest-Zeitdauergröße mittels des Akkupacks, insbesondere einer Bestimmungseinrichtung des Akkupacks. Insbesondere weist das Verfahren auf: Bereitstellen der bestimmten Rest-Zeitdauergröße von dem Akkupack an das Bearbeitungsgerät. Dies, insbesondere das Ermitteln der Ist-Aufnahmeleistungsgröße mittels des Bearbeitungsgeräts, ermöglicht das vorhergehend Genannte für den Akkupack ohne Möglichkeit zum eigenen Ermitteln.

Insbesondere können/kann das Senden und/oder das Bereitstellen automatisch und/oder computerimplementiert sein und/oder zeitlich dauerhaft bzw. zyklisch bzw. wiederholt erfolgen.

In einer Ausgestaltung der Erfindung erfolgt das Bestimmen der Rest-Zeitdauergröße anhand einer Ist-Aufnahmeleistungsgröße-Zeitdauergröße-Integration, insbesondere mit Gewichtung, der ermittelten Ist-Aufnahmeleistungsgröße in Bezug auf die Dauer-Abgabeleistungsgröße. Insbesondere kann dies als Strom-Zeit-Zähler bezeichnet werden. Im Übrigen wird auf die Fachliteratur verwiesen.

In einer Weiterbildung der Erfindung sind die Bearbeitungsgeräte eine Kletter-Kettensäge, eine Fäll- und Entastungs-Kettensäge, ein Trennschleifer und/oder ein Blasgerät. Zusätzlich oder alternativ sind die Betriebsmodi ein Entastungs-Betriebsmodus und/oder ein Fäll-Betriebsmodus. Insbesondere kann für die Kletter-Kettensäge die Aufnahmeleistungsgröße am höchsten sein, und insbesondere die Zeitdauergröße kann am kürzesten sein, und/oder für das Blasgerät kann die Aufnahmeleistungsgröße am niedrigsten sein, und insbesondere die Zeitdauergröße kann am längsten sein. Zusätzlich oder alternativ kann für den Entastungs-Betriebsmodus die Aufnahmeleistungsgröße am höchsten sein, und insbesondere die Zeitdauergröße kann am kürzesten sein, und/oder für den Fäll-Betriebsmodus kann die Aufnahmeleistungsgröße am niedrigsten sein, und insbesondere die Zeitdauergröße kann am längsten sein.

In einer Weiterbildung der Erfindung erfolgt das Senden der Anfrage ausgelöst durch das Verbinden des Bearbeitungsgeräts und des Akkupacks miteinander und/oder ein Betätigen eines benutzerbetätigbaren Bedienelements, insbesondere eines Startknopfes, des Bearbeitungsgeräts und/oder durch ein Umschalten zwischen den Betriebsmodi, insbesondere durch den Benutzer. Insbesondere kann das Senden initial bzw. einmal erfolgen. Zusätzlich oder alternative kann ein Aufwachen einer Elektronik des Bearbeitungsgeräts ausgelöst durch das Betätigen erfolgen und das Senden kann ausgelöst durch das Aufwachen erfolgen. Weiter zusätzlich oder alternativ kann das Umschalten ausgelöst durch ein Betätigen eines benutzerbetätigbaren Umschaltbedienelements des Bearbeitungsgeräts erfolgen.

Insbesondere kann das Betreiben ausgelöst durch eine, insbesondere in Abhängigkeit von einer, Betätigung, insbesondere Verstellung, eines benutzerbetätigbaren, insbesondere benutzerverstellbaren, Betriebsbedienelements des Bearbeitungsgeräts erfolgen. Im Übrigen wird auf die Fachliteratur verwiesen.

In einer Weiterbildung der Erfindung ist der Akkupack aus einer Menge von mit dem Bearbeitungsgerät lösbar elektrisch verbindbaren verschiedenen Akkupacks gewählt. Die Akkupacks sind verschieden in einer, insbesondere der, jeweiligen Dauer-Abgabeleistungsgröße.

Das erfindungsgemäße System ist zum Betreiben des elektrisch angetriebenen Bearbeitungsgeräts mit mindestens dem Akkupack. Der Akkupack ist zur Versorgung des Bearbeitungsgeräts mit elektrischer Antriebsleistung vorgesehen. Das Bearbeitungsgerät und der Akkupack sind miteinander zur Versorgung lösbar elektrisch verbunden. Das Bearbeitungsgerät ist aus der Menge von mit dem Akkupack lösbar elektrisch verbindbaren verschiedenen Bearbeitungsgeräten gewählt. Die Bearbeitungsgeräte sind verschieden in der jeweiligen Aufnahmeleistungsgröße. Zusätzlich oder alternativ weist das Bearbeitungsgerät die verschiedenen Betriebsmodi auf. Die Betriebsmodi sind verschieden in der jeweiligen Aufnahmeleistungsgröße. Die mindestens eine Aufnahmeleistungsgröße ist, insbesondere während des Betriebs des Bearbeitungsgeräts mit dem Akkupack, zumindest zeitweise höher als die Dauer-Abgabeleistungsgröße des Akkupacks. Das System weist die Sendeeinrichtung, die Bereitstellungseinrichtung und die Betriebseinrichtung auf. Die Sendeeinrichtung ist zu dem Senden der Anfrage der Aufnahmeleistungsgrößen-Information von dem Bearbeitungsgerät an den Akkupack vorgesehen. Die Bereitstellungseinrichtung ist zu dem Bereitstellen der Antwort von dem Akkupack an das Bearbeitungsgerät in Abhängigkeit von der gesendeten Anfrage vorgesehen. Die Betriebseinrichtung ist zu dem Betreiben des Bearbeitungsgeräts in Abhängigkeit von der bereitgestellten Antwort vorgesehen. Das System kann den/die gleichen Vorteil/e wie für das Verfahren vorhergehend genannt ermöglichen. Insbesondere kann das System zum, insbesondere automatischen, Ausführen des Verfahrens wie vorhergehend genannt vorgesehen sein. Zusätzlich oder alternativ können/kann das System, die Sendeeinrichtung, die Bereitstellungseinrichtung und/oder die Betriebseinrichtung elektrisch sein und/oder eine Recheneinrichtung und/oder einen Prozessor und/oder einen Mikrocontroller und/oder eine Speichereinrichtung und/oder einen Computer aufweisen, insbesondere sein.

In einer Weiterbildung der Erfindung weist das System das Bearbeitungsgerät und/oder den Akkupack auf. Insbesondere können/kann das Bearbeitungsgerät und/oder der Akkupack wie für das Verfahren vorhergehend genannt vorgesehen sein.

Der erfindungsgemäße Akkupack ist für das System wie vorhergehend genannt.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: schematisch ein erfindungsgemäßes System aufweisend ein elektrisch angetriebenes Bearbeitungsgerät und einen erfindungsgemäßen Akkupack zum Betreiben des Bearbeitungsgeräts mit dem Akkupack,
- Fig. 2: schematisch ein erfindungsgemäßes Verfahren zum Betreiben des Bearbeitungsgeräts mit dem Akkupack aufweisend ein Bestimmen einer von dem Akkupack verfügbaren Aufnahmeleistungsgröße und einer verfügbaren Zeitdauergröße anhand von Parametern einer Kennlinie einer Abgabeleistungsgröße über einer Zeitdauergröße,
- Fig. 3: schematisch das System und das Verfahren aufweisend das Bestimmen mittels des Akkupacks,
- Fig. 4: schematisch eine Ist-Aufnahmeleistungsgröße des Betreibens über einer Zeit und eine Rest-Zeitdauergröße, für die die verfügbare Aufnahmeleistungsgröße von dem Akkupack verfügbar ist, in Abhängigkeit von der Ist-Aufnahmeleistungsgröße über der Zeit, und
- Fig. 5: schematisch das System und das Verfahren aufweisend das Bestimmen mittels des Bearbeitungsgeräts.

### DETAILLIERTE BESCHREIBUNG DER AUSFÜHRUNGSBEISPIELE

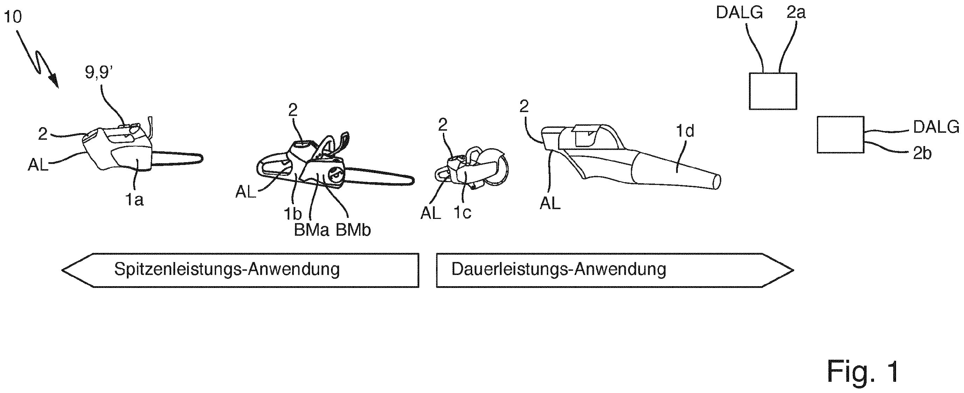

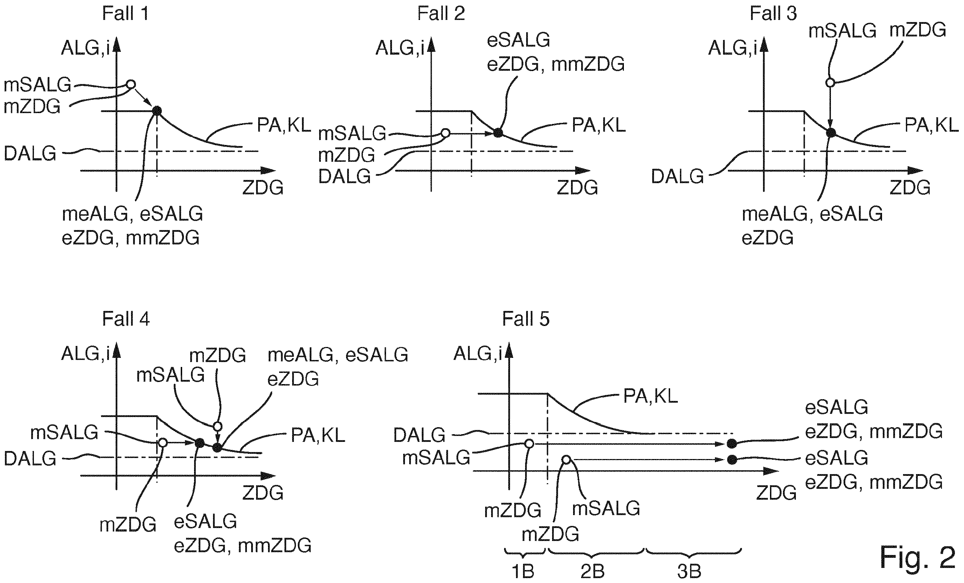

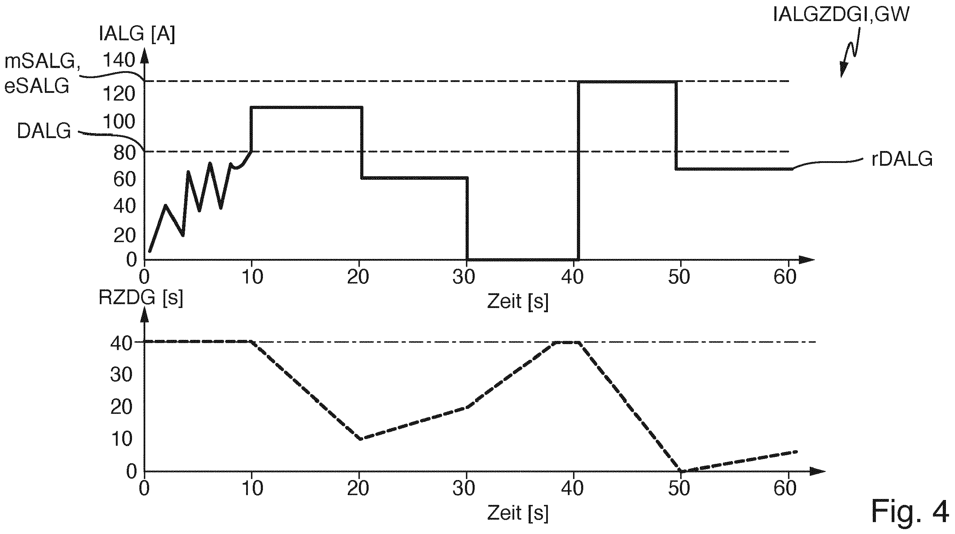

Fig. 1 bis 5 zeigen ein erfindungsgemäßes System 10 und ein erfindungsgemäßes Verfahren zum Betreiben eines elektrisch angetriebenen Bearbeitungsgeräts 1 mit mindestens einem, insbesondere erfindungsgemäßen, Akkupack 2. Der Akkupack 2 ist zur Versorgung des Bearbeitungsgeräts 1 mit elektrischer Antriebsleistung AL vorgesehen, insbesondere versorgt. Das Bearbeitungsgerät 1 und der Akkupack 2 sind miteinander zur Versorgung lösbar elektrisch verbunden. Das Bearbeitungsgerät 1 ist aus einer Menge von mit dem Akkupack 2 lösbar elektrisch verbindbaren verschiedenen Bearbeitungsgeräten 1a, 1b, 1c, 1d gewählt, wie in Fig. 1 gezeigt. Die Bearbeitungsgeräte 1a-d sind verschieden in einer jeweiligen Aufnahmeleistungsgröße mSALG. Zusätzlich oder alternativ weist das Bearbeitungsgerät 1 verschiedene Betriebsmodi BMa, BMb auf, wie in Fig. 1 gezeigt. Die Betriebsmodi BMa-b sind verschieden in der jeweiligen Aufnahmeleistungsgröße mSALG. Mindestens eine Aufnahmeleistungsgröße mSALG ist, insbesondere während des Betriebs des Bearbeitungsgeräts 1 mit dem Akkupack 2, zumindest zeitweise höher als eine Dauer-Abgabeleistungsgröße DALG des Akkupacks 2, wie in Fig. 2 und 4 gezeigt.

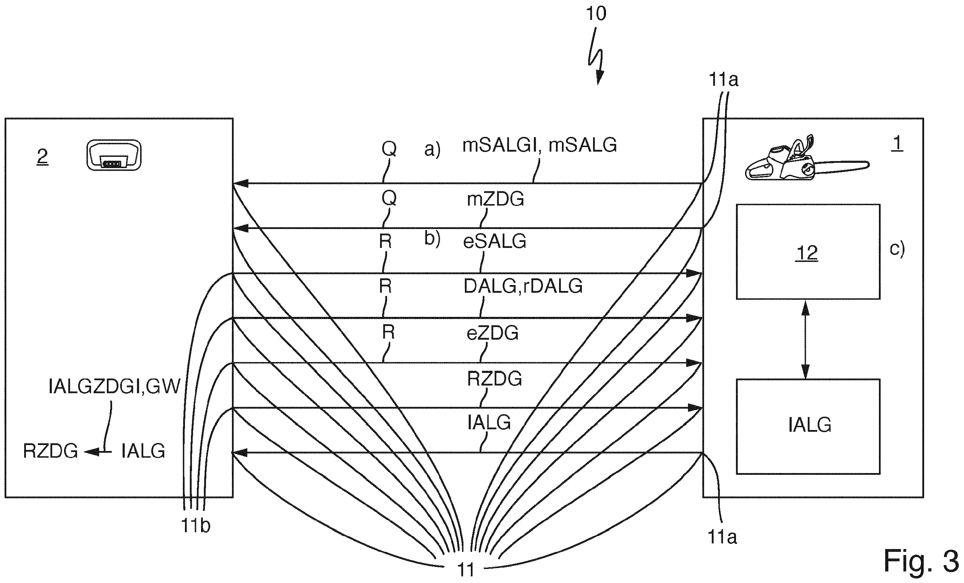

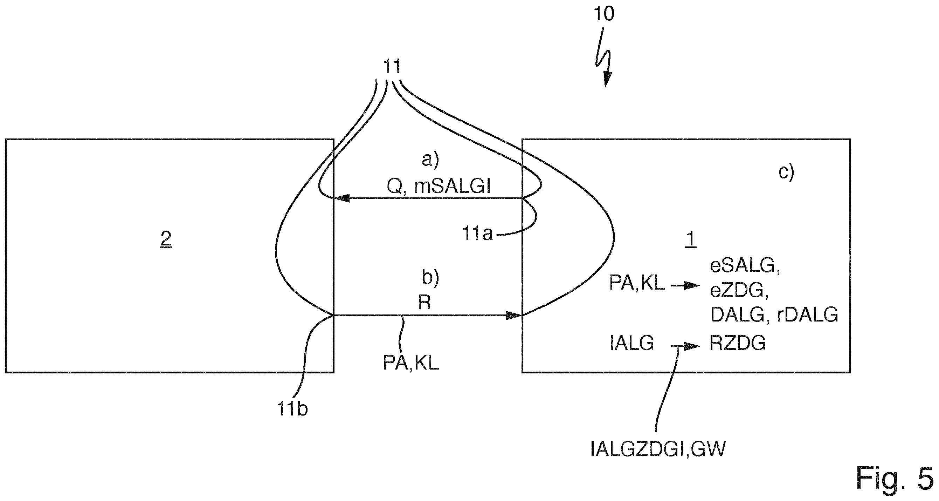

Das System 10 weist eine Sendeeinrichtung 11a, insbesondere einer Kommunikationseinrichtung 11 des Systems 10, eine Bereitstellungseinrichtung 11b, insbesondere der Kommunikationseinrichtung 11, und eine Betriebseinrichtung 12 auf, wie in Fig. 3 und 5 gezeigt. Die Sendeeinrichtung 11a ist zum Senden einer Anfrage Q einer Aufnahmeleistungsgrößen-Information mSALGI von dem Bearbeitungsgerät 1 an den Akkupack 2 vorgesehen, insbesondere sendet. Die Bereitstellungseinrichtung 11b ist zum Bereitstellen einer Antwort R von dem Akkupack 2 an das Bearbeitungsgerät 1 in Abhängigkeit von der gesendeten Anfrage Q vorgesehen, insbesondere stellt bereit. Die Betriebseinrichtung 12 ist zu dem Betreiben des Bearbeitungsgeräts 1 in Abhängigkeit von der bereitgestellten Antwort R vorgesehen, insbesondere betreibt.

Im Detail weist das System 10 das Bearbeitungsgerät 1 und/oder den Akkupack 2 auf.

Das Verfahren weist die Schritte auf: a) Senden der Anfrage Q der Aufnahmeleistungsgrößen-Information mSALGI von dem Bearbeitungsgerät 1 an den Akkupack 2. b) Bereitstellen der Antwort R von dem Akkupack 2 an das Bearbeitungsgerät 1 in Abhängigkeit von der gesendeten Anfrage Q. c) Betreiben des Bearbeitungsgeräts 1 in Abhängigkeit von der bereitgestellten Antwort R.

In Fig. 3 umfasst die Anfrage Q die Aufnahmeleistungsgröße mSALG, und insbesondere eine Zeitdauergröße mZDG. Für die Zeitdauergröße mZDG soll die Aufnahmeleistungsgröße mSALG von dem Akkupack 2 verfügbar sein. Das Bereitstellen der Antwort R umfasst ein Bestimmen einer von dem Akkupack 2 verfügbaren Aufnahmeleistungsgröße eSALG, und insbesondere eine verfügbare Zeitdauergröße eZDG. Für die verfügbare Zeitdauergröße eZDG ist die verfügbare Aufnahmeleistungsgröße eSALG von dem Akkupack 2 verfügbar. Das Betreiben des Bearbeitungsgeräts 1 erfolgt maximal mit einer Aufnahmeleistungsgröße entsprechend der verfügbaren Aufnahmeleistungsgröße eSALG zumindest zeitweise, insbesondere maximal für eine Zeitdauergröße entsprechend der verfügbaren Zeitdauergröße eZDG.

Im Detail erfolgt das Bestimmen der verfügbaren Aufnahmeleistungsgröße eSALG, und insbesondere der verfügbaren Zeitdauergröße eZDG, anhand von Parametern PA einer Kennlinie KL einer Abgabeleistungsgröße ALG über einer Zeitdauergröße ZDG, die durch den Akkupack 2 definiert ist, wie in Fig. 2 gezeigt.

In Fig. 5 löst das Senden der Anfrage Q das Bereitstellen der Antwort R aus. Zusätzlich oder alternativ weist die Antwort R die Parameter PA der Kennlinie KL der Abgabeleistungsgröße ALG über der Zeitdauergröße ZDG, die durch den Akkupack 2 definiert ist, auf. Das Verfahren weist den Schritt auf: Bestimmen der von dem Akkupack 2 verfügbaren Aufnahmeleistungsgröße eSALG, und insbesondere der verfügbaren Zeitdauergröße eZDG, für die die verfügbare Aufnahmeleistungsgröße eSALG von dem Akkupack 2 verfügbar ist, anhand von der bereitgestellten Antwort R mittels des Bearbeitungsgeräts 1, wie in Fig. 2 gezeigt. Das Betreiben des Bearbeitungsgeräts 1 erfolgt maximal mit der Aufnahmeleistungsgröße entsprechend der verfügbaren Aufnahmeleistungsgröße eSALG zumindest zeitweise, insbesondere maximal für die Zeitdauergröße entsprechend der verfügbaren Zeitdauergröße eZDG.

Im Detail ist mit zunehmender Zeitdauergröße ZDG die Abgabeleistungsgröße ALG in einem ersten Bereich 1B konstant, nimmt in einem zweiten Bereich 2B ab und ist in einem dritten Bereich 3B konstant, insbesondere entspricht der Dauer-Abgabeleistungsgröße DALG.

Des Weiteren erfolgt das Bestimmen derart, dass mit abnehmender Priorität erstens die Zeitdauergröße mZDG erreicht wird, zweitens die Aufnahmeleistungsgröße mSALG, mindestens eine für die Zeitdauergröße mZDG von dem Akkupack 2 maximal verfügbare Aufnahmeleistungsgröße meALG erreicht wird, und drittens die Zeitdauergröße mmZDG maximiert wird.

Außerdem weist das Verfahren auf: Ermitteln, insbesondere Erfassen, einer Ist-Aufnahmeleistungsgröße IALG des Betreibens, wie in Fig. 3 und 5 gezeigt. Bestimmen einer verfügbaren Rest-Zeitdauergröße RZDG, für die die verfügbare Aufnahmeleistungsgröße eSALG von dem Akkupack 2 verfügbar ist, in Abhängigkeit von der ermittelten Ist-Aufnahmeleistungsgröße IALG. Das Betreiben erfolgt in Abhängigkeit von der bestimmten Rest-Zeitdauergröße RZDG, insbesondere bei Rest-Zeitdauergröße RZDG gleich Null derart, dass mindestens die Dauer-Abgabeleistungsgröße DALG, insbesondere eine gegenüber der Dauer-Abgabeleistungsgröße DALG reduzierte Abgabeleistungsgröße rDALG, die von der Antwort R aufgewiesen ist und/oder anhand der Parameter PA bestimmt ist, nicht überschritten wird, wie in Fig. 4 gezeigt.

Im Detail erfolgt das Ermitteln der Ist-Aufnahmeleistungsgröße IALG mittels des Bearbeitungsgeräts 1.

In Fig. 3 weist das Verfahren auf: Senden der ermittelten Ist-Aufnahmeleistungsgröße IALG von dem 1 Bearbeitungsgerät an den Akkupack 2.

Zusätzlich oder alternativ erfolgt das Bestimmen der Rest-Zeitdauergröße RZDG mittels des Akkupacks 2.

In Fig. 3 weist das Verfahren auf: Bereitstellen der bestimmten Rest-Zeitdauergröße RZDG von dem Akkupack 2 an das Bearbeitungsgerät 1.

In Fig. 5 erfolgt das Bestimmen der Rest-Zeitdauergröße RZDG mittels des Bearbeitungsgeräts 1.

Weiter erfolgt das Bestimmen der Rest-Zeitdauergröße RZDG anhand einer Ist-Aufnahmeleistungsgröße-Zeitdauergröße-Integration IALGZDGI, insbesondere mit Gewichtung GW, der ermittelten Ist-Aufnahmeleistungsgröße IALG in Bezug auf die Dauer-Abgabeleistungsgröße DALG.

Zudem sind die Bearbeitungsgeräte 1a-d eine Kletter-Kettensäge 1a, eine Fäll- und Entastungs-Kettensäge 1b, ein Trennschleifer 1c und/oder ein Blasgerät 1d. Zusätzlich oder alternativ sind die Betriebsmodi BMa-b ein Entastungs-Betriebsmodus BMa und/oder ein Fäll-Betriebsmodus BMb.

Des Weiteren erfolgt das Senden der Anfrage Q ausgelöst durch das Verbinden des Bearbeitungsgeräts 1 und des Akkupacks 2 miteinander und/oder ein Betätigen eines benutzerbetätigbaren Bedienelements 9, insbesondere eines Startknopfes 9`, des Bearbeitungsgeräts 1 und/oder durch ein Umschalten zwischen den Betriebsmodi BMa-b.

Außerdem ist der Akkupack 2 aus einer Menge von mit dem Bearbeitungsgerät 1 lösbar elektrisch verbindbaren verschiedenen Akkupacks 2a, 2b gewählt. Die Akkupacks 2a-b sind verschieden in der jeweiligen Dauer-Abgabeleistungsgröße DALG.

Im Übrigen ist eine, insbesondere elektrische, Nennspannung des Akkupacks 2 und/oder des Bearbeitungsgeräts 1 36 V. In alternativen Ausführungsbeispielen kann die Nennspannung weniger oder mehr als 36 V sein, insbesondere 18 V oder 72 V.

Zusätzlich oder alternativ ist die Antriebsleistung AL minimal 10 Watt (W), insbesondere minimal 100 W, insbesondere minimal 1 kW (Kilowatt), insbesondere minimal 2 kW, und/oder maximal 10 kW, insbesondere maximal 5 kW, insbesondere 3kW.

Weiter zusätzlich oder alternativ ist ein maximaler, insbesondere elektrischer, Energieinhalt, insbesondere Nennenergieinhalt, des Akkupacks 2 minimal 50 Wh (Wattstunden), insbesondere minimal 100 Wh, insbesondere minimal 200 Wh, und/oder maximal 4000 Wh, insbesondere maximal 2000 Wh, insbesondere maximal 1000 Wh, insbesondere maximal 500 Wh, insbesondere 337 Wh.

Wie die gezeigten und vorhergehend erläuterten Ausführungsbeispiele deutlich machen, stellt die Erfindung das vorteilhafte Verfahren und das vorteilhafte System zum Betreiben des elektrisch angetriebenen Bearbeitungsgeräts mit mindestens dem Akkupack bereit, das verbesserte Eigenschaften aufweist, insbesondere eine Leistungssteigerung ermöglicht. Des Weiteren stellt die Erfindung den vorteilhaften Akkupack für das System bereit.

## Patentansprüche

1. Verfahren zum Betreiben eines elektrisch angetriebenen Bearbeitungsgeräts (1) mit mindestens einem Akkupack (2), der zur Versorgung des Bearbeitungsgeräts (1) mit elektrischer Antriebsleistung (AL) vorgesehen ist, wobei das Bearbeitungsgerät (1) und der Akkupack (2) miteinander zur Versorgung lösbar elektrisch verbunden sind,
- wobei das Bearbeitungsgerät (1) aus einer Menge von mit dem Akkupack (2) lösbar elektrisch verbindbaren verschiedenen Bearbeitungsgeräten (1a, 1b, 1c, 1d) gewählt ist, die verschieden sind in einer jeweiligen Aufnahmeleistungsgröße (mSALG), und/oder wobei das Bearbeitungsgerät (1) verschiedene Betriebsmodi (BMa, BMb) aufweist, die verschieden sind in einer jeweiligen Aufnahmeleistungsgröße (mSALG),
- wobei mindestens eine Aufnahmeleistungsgröße (mSALG), insbesondere während des Betriebs des Bearbeitungsgeräts (1) mit dem Akkupack (2), zumindest zeitweise höher ist als eine Dauer-Abgabeleistungsgröße (DALG) des Akkupacks (2),
- wobei das Verfahren die Schritte aufweist:
a) Senden einer Anfrage (Q) einer Aufnahmeleistungsgrößen-Information (mSALGI) von dem Bearbeitungsgerät (1) an den Akkupack (2),
b) Bereitstellen einer Antwort (R) von dem Akkupack (2) an das Bearbeitungsgerät (1) in Abhängigkeit von der gesendeten Anfrage (Q), und
c) Betreiben des Bearbeitungsgeräts (1) in Abhängigkeit von der bereitgestellten Antwort (R).

2. Verfahren nach Anspruch 1,
- wobei die Anfrage (Q) die Aufnahmeleistungsgröße (mSALG), und insbesondere eine Zeitdauergröße (mZDG), für die die Aufnahmeleistungsgröße (mSALG) von dem Akkupack (2) verfügbar sein soll, umfasst,
- wobei das Bereitstellen der Antwort (R) ein Bestimmen einer von dem Akkupack (2) verfügbaren Aufnahmeleistungsgröße (eSALG), und insbesondere eine verfügbare Zeitdauergröße (eZDG), für die die verfügbare Aufnahmeleistungsgröße (eSALG) von dem Akkupack (2) verfügbar ist, umfasst, und
- wobei das Betreiben des Bearbeitungsgeräts (1) maximal mit einer Aufnahmeleistungsgröße entsprechend der verfügbaren Aufnahmeleistungsgröße (eSALG) zumindest zeitweise, insbesondere maximal für eine Zeitdauergröße entsprechend der verfügbaren Zeitdauergröße (eZDG), erfolgt.

3. Verfahren nach Anspruch 2,
- wobei das Bestimmen der verfügbaren Aufnahmeleistungsgröße (eSALG), und insbesondere der verfügbaren Zeitdauergröße (eZDG), anhand von Parametern (PA) einer Kennlinie (KL) einer Abgabeleistungsgröße (ALG) über einer Zeitdauergröße (ZDG), die durch den Akkupack (2) definiert ist, erfolgt.

4. Verfahren nach einem der Ansprüche 1 bis 3,
- wobei das Senden der Anfrage (Q) das Bereitstellen der Antwort (R) auslöst, und/oder
- wobei die Antwort (R) Parameter (PA) einer Kennlinie (KL) einer Abgabeleistungsgröße (ALG) über einer Zeitdauergröße (ZDG), die durch den Akkupack (2) definiert ist, aufweist,
- wobei das Verfahren den Schritt aufweist: Bestimmen einer von dem Akkupack (2) verfügbaren Aufnahmeleistungsgröße (eSALG), und insbesondere einer verfügbaren Zeitdauergröße (eZDG), für die die verfügbare Aufnahmeleistungsgröße (eSALG) von dem Akkupack (2) verfügbar ist, anhand von der bereitgestellten Antwort (R) mittels des Bearbeitungsgeräts (1), und
- wobei das Betreiben des Bearbeitungsgeräts (1) maximal mit einer Aufnahmeleistungsgröße entsprechend der verfügbaren Aufnahmeleistungsgröße (eSALG) zumindest zeitweise, insbesondere maximal für eine Zeitdauergröße entsprechend der verfügbaren Zeitdauergröße (eZDG), erfolgt.

5. Verfahren nach Anspruch 3 oder 4,
- wobei mit zunehmender Zeitdauergröße (ZDG) die Abgabeleistungsgröße (ALG) in einem ersten Bereich (1B) konstant ist, in einem zweiten Bereich (2B) abnimmt, und in einem dritten Bereich (3B) konstant ist, insbesondere der Dauer-Abgabeleistungsgröße (DALG) entspricht.

6. Verfahren nach einem der Ansprüche 2 bis 5,
- wobei das Bestimmen derart erfolgt, dass mit abnehmender Priorität erstens die Zeitdauergröße (mZDG) erreicht wird, zweitens die Aufnahmeleistungsgröße (mSALG), mindestens eine für die Zeitdauergröße (mZDG) von dem Akkupack (2) maximal verfügbare Aufnahmeleistungsgröße (meALG) erreicht wird, und drittens die Zeitdauergröße (mmZDG) maximiert wird.

7. Verfahren nach einem der Ansprüche 2 bis 6, wobei das Verfahren aufweist:
- Ermitteln, insbesondere Erfassen, einer Ist-Aufnahmeleistungsgröße (IALG) des Betreibens,
- Bestimmen einer verfügbaren Rest-Zeitdauergröße (RZDG), für die die verfügbare Aufnahmeleistungsgröße (eSALG) von dem Akkupack (2) verfügbar ist, in Abhängigkeit von der ermittelten Ist-Aufnahmeleistungsgröße (IALG), und
- wobei das Betreiben in Abhängigkeit von der bestimmten Rest-Zeitdauergröße (RZDG) erfolgt, insbesondere bei Rest-Zeitdauergröße (RZDG) gleich Null derart, dass mindestens die Dauer-Abgabeleistungsgröße (DALG), insbesondere eine gegenüber der Dauer-Abgabeleistungsgröße (DALG) reduzierte Abgabeleistungsgröße (rDALG), die von der Antwort (R) aufgewiesen ist und/oder anhand der Parameter (PA) bestimmt ist, nicht überschritten wird.

8. Verfahren nach Anspruch 7,
- wobei das Ermitteln der Ist-Aufnahmeleistungsgröße (IALG) mittels des Bearbeitungsgeräts (1) erfolgt, insbesondere wobei das Verfahren aufweist: Senden der ermittelten Ist-Aufnahmeleistungsgröße (IALG) von dem Bearbeitungsgerät (1) an den Akkupack (2), und/oder
- wobei das Bestimmen der Rest-Zeitdauergröße (RZDG) mittels des Akkupacks (2) erfolgt, insbesondere wobei das Verfahren aufweist: Bereitstellen der bestimmten Rest-Zeitdauergröße (RZDG) von dem Akkupack (2) an das Bearbeitungsgerät (1).

9. Verfahren nach Anspruch 7 oder 8,
- wobei das Bestimmen der Rest-Zeitdauergröße (RZDG) anhand einer Ist-Aufnahmeleistungsgröße-Zeitdauergröße-Integration (IALGZDGI), insbesondere mit Gewichtung (GW), der ermittelten Ist-Aufnahmeleistungsgröße (IALG) in Bezug auf die Dauer-Abgabeleistungsgröße (DALG) erfolgt.

10. Verfahren nach einem der Ansprüche 1 bis 9,
- wobei die Bearbeitungsgeräte (1a-d) eine Kletter-Kettensäge (1a), eine Fäll- und Entastungs-Kettensäge (1b), ein Trennschleifer (1c) und/oder ein Blasgerät (1d) sind, und/oder
- wobei die Betriebsmodi (BMa-b) ein Entastungs-Betriebsmodus (BMa) und/oder ein Fäll-Betriebsmodus (BMb) sind.

11. Verfahren nach einem der Ansprüche 1 bis 10,
- wobei das Senden der Anfrage (Q) ausgelöst durch das Verbinden des Bearbeitungsgeräts (1) und des Akkupacks (2) miteinander und/oder ein Betätigen eines benutzerbetätigbaren Bedienelements (9), insbesondere eines Startknopfes (9'), des Bearbeitungsgeräts (1) und/oder durch ein Umschalten zwischen den Betriebsmodi (BMa-b) erfolgt.

12. Verfahren nach einem der Ansprüche 1 bis 11,
- wobei der Akkupack (2) aus einer Menge von mit dem Bearbeitungsgerät (1) lösbar elektrisch verbindbaren verschiedenen Akkupacks (2a, 2b) gewählt ist, die verschieden sind in einer jeweiligen Dauer-Abgabeleistungsgröße (DALG).

13. System (10) zum Betreiben eines elektrisch angetriebenen Bearbeitungsgeräts (1) mit mindestens einem Akkupack (2), der zur Versorgung des Bearbeitungsgeräts (1) mit elektrischer Antriebsleistung (AL) vorgesehen ist, wobei das Bearbeitungsgerät (1) und der Akkupack (2) miteinander zur Versorgung lösbar elektrisch verbunden sind,
- wobei das Bearbeitungsgerät (1) aus einer Menge von mit dem Akkupack (2) lösbar elektrisch verbindbaren verschiedenen Bearbeitungsgeräten (1a, 1b, 1c, 1d) gewählt ist, die verschieden sind in einer jeweiligen Aufnahmeleistungsgröße (mSALG), und/oder wobei das Bearbeitungsgerät (1) verschiedene Betriebsmodi (BMa, BMb) aufweist, die verschieden sind in einer jeweiligen Aufnahmeleistungsgröße (mSALG),
- wobei mindestens eine Aufnahmeleistungsgröße (mSALG), insbesondere während des Betriebs des Bearbeitungsgeräts (1) mit dem Akkupack (2), zumindest zeitweise höher ist als eine Dauer-Abgabeleistungsgröße (DALG) des Akkupacks (2),
- insbesondere zum Ausführen eines Verfahrens nach einem der Ansprüche 1 bis 12,
- wobei das System (10) aufweist:
- eine Sendeeinrichtung (11a), die zum Senden einer Anfrage (Q) einer Aufnahmeleistungsgrößen-Information (mSALGI) von dem Bearbeitungsgerät (1) an den Akkupack (2) vorgesehen ist,
- eine Bereitstellungseinrichtung (11b), die zum Bereitstellen einer Antwort (R) von dem Akkupack (2) an das Bearbeitungsgerät (1) in Abhängigkeit von der gesendeten Anfrage (Q) vorgesehen ist, und
- eine Betriebseinrichtung (12), die zum Betreiben des Bearbeitungsgeräts (1) in Abhängigkeit von der bereitgestellten Antwort (R) vorgesehen ist.

14. System (10) nach Anspruch 13, wobei das System (10) aufweist:
- das Bearbeitungsgerät (1) und/oder den Akkupack (2).

15. Akkupack (2) für ein System (10) nach Anspruch 13 oder 14.
